# EUROPÄISCHE PATENTSCHRIFT

(11) **EP 1 593 643 B1**
(45) Veröffentlichungstag und Bekanntmachung des Hinweises auf die Patenterteilung: **02.01.2013**
(21) Anmeldenummer: 05007758.5
(22) Anmeldetag: 08.04.2005
(51) Int. Cl.: B66F 9/065, E02F 3/28, B66F 9/075, B66F 9/07, B60K 17/10, B60W 10/06, E02F 9/20

(54) **Telelader, insbesondere Reachstacker**
Telescopic loader, in particular reach stacker.
Chargeur téléscopique, en particulier élévateur rétractable.

(30) Priorität: 04.05.2004 DE 102004021839
(43) Veröffentlichungstag der Anmeldung: 09.11.2005
(73) Patentinhaber: Liebherr-Werk Nenzing GmbH, 6710 Nenzing (AT)
(72) Erfinder: Scheidl, Andreas, 6791 St.Gallenkirch Vorarlberg (AT); Schneider, Klaus, 88145 Hergatz (DE)
(74) Vertreter: Laufhütte, Dieter

(56) Entgegenhaltungen:
- EP-A1- 0 325 064
- EP-A2- 0 901 928
- DE-A1- 4 340 126
- US-A- 5 021 958
- US-A- 5 994 865
- US-A- 5 999 872
- US-A- 6 062 332
- US-B1- 6 315 658

## Beschreibung

Die Erfindung betrifft einen Telelader, insbesondere Reachstacker bestehend aus einem Fahrzeugrahmen, an diesem angeordneten Rädern, einem Motor, vorzugsweise einem Dieselmotor, und einem auf diesem verschwenkbar angeordneten Teleskopausleger mit einem Lastaufnahmemittel für den Umschlag von schweren Lasten wie Container, Trailern, Blech-Coils, Stückgut und ähnlichem.

Reachstacker sind gummibereifte, mit Dieselmotor und Fahrerkabine ausgestattete Fahrzeuge, ähnlich einem eingefahrenen Autokran. Sie können Container transportieren und stapeln. Die bisher bekannten Reachstacker sind mit einem am Teleskoparm fest verbundenen Containerspreader ausgestattet, d. h. die Spreaderhöherbewegung wird nur über den Teleskoparm vorgenommen. Bei bekannten Reachstackern ist die Fahrerkabine auf dem Fahrzeug im hinteren Teil fest oder beweglich auf dem Rahmen verbunden angeordnet, was dem Fahrer bei der vorhanden Konstruktion immer eine gute Sicht auf den mit dem Teleskoparm fest verbundenen Containerspreader erlaubt.

Bei den bekannten Teleladern werden üblicherweise Dieselmotoren eingesetzt, die über konventionelle Drehmomentwandler mit einem mechanischen Getriebe verbunden sind. Die Richtungsvorgabe, d. h. ein Umstellen von Vorwärts- auf Rückwärtsfahren erfolgt über einen zusätzlichen Fahrtrichtungswahlschalter. Die Geschwindigkeitsvorgabe erfolgt über das Gaspedal. Zur Geschwindigkeitsreduktion sind mechanische Bremsen vorgesehen.

Diese vorbekannten Antriebe bedingen einen nur geringen Bedienkomfort für den Fahrer, da er neben dem eigentlichen Handling der Last, d. h. einer Steuerung des Auslegers nach Länge und Winkel, zusätzlich die gewünschte Geschwindigkeit und Position des Reachstackers über mehrere Bedienelemente, nämlich über das Lenkrad, das Gaspedal und den Fahrtrichtungswahlschalter vorgeben muss. Weiterhin ist bei Verwendung des konventionellen Gaspedals und eines konventionellen Getriebes ein energieoptimierter Betrieb des Teleladers kaum bzw. nur sehr bedingt möglich. Schließlich ist der Verschleiß der bislang eingesetzten mechanischen Bremsen recht hoch und bedingt eine ständige Wartung bzw. Kontrolle.

Aus der EP 0 325 064 A1 ist ein selbstfahrender Hubwagen mit hydrostatischem Antrieb der Vorderachse bekannt.

Aus der US 6,315,658 B1 ist eine Erntemaschine mit hydraulischem Antrieb sowie einer entsprechenden Antriebsregelung bekannt.

Die US 5,021,958 offenbart ein Fahrzeug mit einem Hydraulikgetriebe, wobei die Getriebesteuerung in Abhängigkeit bestimmter Motorparameter erfolgt.

Aus der US 5,999,872 ist eine Steuervorrichtung für einen Hydraulikbagger bekannt.

Aufgabe der Erfindung ist es, einen gattungsgemäßen Telelader derart weiterzubilden, dass der Bedienkomfort für seinen Fahrer erheblich verbessert wird, wobei gleichzeitig ein energieoptimierter Einsatz des Reachstackers bei geringer Wartung möglich ist.

Erfindungsgemäß wird diese Aufgabe durch die Kombination der Merkmale des Anspruchs 1 gelöst.

Gemäß dieser Lösung sind die Räder über einen hydrostatischen Antrieb antreibbar, der über eine Fahrwerksregelung steuerbar ist, wobei die Fahrwerksregelung Sensoren zum Erfassen der Ist-Zustände aufweisen kann. Erfindungsgemäß ist eine Fuzzylogikeinheit zur Ermittlung der Regeln der Fahreigenschaft in Abhängigkeit von einem Steuerbefehl in Kombination mit nachgeschalteten Reglern, über die die Befehle an die Stellglieder des hydrostatischen Antriebs eiterleitbar sind vorgesehen. Es besteht aber auch die Möglichkeit die Verarbeitung der Sensorik und die daraus resultierende Berechnung der entsprechenden Stellgrößen, über anders strukturierte Logik- bzw. Regleralgorithmen zu implementieren. Durch die Ausstattung.des Teleladers mit einem hydrostatischen Antrieb kann der Reachstacker beim Fahren im optimalen Betriebspunkt betrieben werden. Dieser optimale Betriebspunkt ist bei dem stufenlosen Getriebe durch die Stellung des hydrostatischen Getriebes und die Drehzahl des Dieselmotors eindeutig definiert. Darüber hinaus ist ein hydrostatisches und damit verschleißarmes Bremsen möglich. Schließlich ist aufgrund des Vorsehens des hydrostatischen Antriebs eine platzsparende kompakte Bauweise gegeben. Die Fahrwerksregelung verarbeitet die durch die Sensoren erfassten Ist-Zustände und ermittelt Fahreigenschaftsregeln in Abhängigkeit von einem Steuerbefehl. Diese entsprechenden Regeln werden z. B. von der Fuzzylogikeinheit an die nachgeschalteten Regler weitergeleitet, über die die Befehle an die Stellglieder des hydrostatischen Antriebs weiterleitbar sind.

Besonders vorteilhafte Ausgestaltungen der Erfindung ergeben sich aus den sich an den Hauptanspruch anschließenden Unteransprüchen.

Demnach werden in der Fuzzylogikeinheit die Regeln für die Fahreigenschaften in vorteilhafter Weise definiert. Hierbei kann es sich beispielsweise um das Beschleunigen oder hydrostatische Abbremsen handeln. In Abhängigkeit von den Fahrzuständen, beispielsweise einer Bergfahrt, kann die Dieselmotordrehzahl erhöht werden. Es kann ein Ausgleich von durchdrehenden Rädern erfolgen. Zum anderen kann ein Fahren unter Last als Fahreigenschaft definiert sein. Auch das Kurvenfahren und die hierbei zu berücksichtigenden Kippgrenzen sind unter die zu definierenden Fahreigenschaften zu rechnen.

Erfindungsgemäß definiert die Fuzzylogikeinheit zusätzlich die Gewichtung der verschiedenen Regler.

Dabei kann die Fahrwerksregelung über ein Bedienelement zentral erfolgen. Dabei ist das Bedienelement zur zentralen Bedienung der Fahrwerksregelung vorteilhaft ein Joystick.

Über den erfindungsgemäßen Fahrwerksregler kann für den Fahrer ein bedeutend höherer Fahrkomfort definiert werden, da er nunmehr über ein Bedienelement, beispielsweise einen Joystick, die Geschwindigkeit und Position des Reachstackers bestimmen kann.

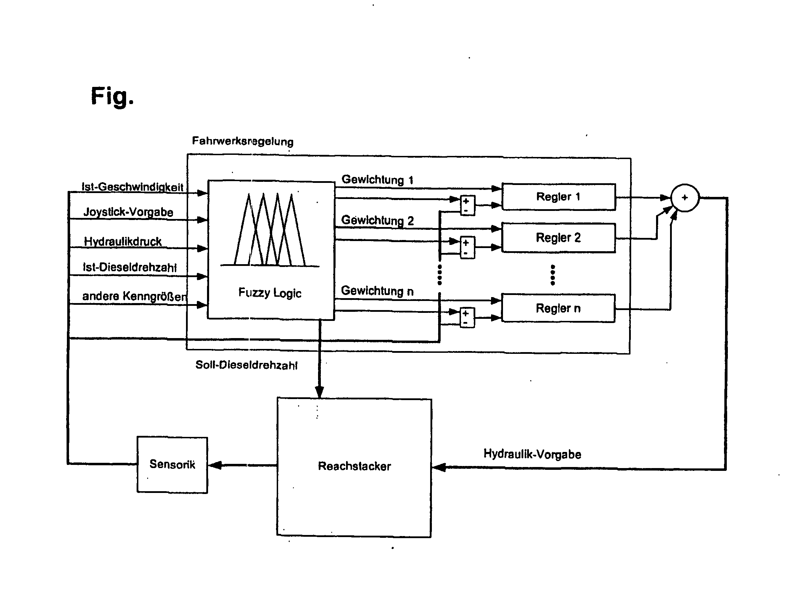

Weitere Merkmale, Einzelheiten und Vorteile der Erfindung ergeben sich aus einem in der Zeichnung dargestellten Ausführungsbeispiel. In der einzigen Figur ist schematisch eine Fahrwerksregelung eines Reachstackers dargestellt.

Der Reachstacker besteht aus einem Fahrzeugrahmen, einer optionalen Lastabstützung, einem Teleskoparm und einer Fahrerkabine. Am Teleskoparm ist ein Lastaufnahmemittel angelenkt, mit dem eine Last aufgenommen werden kann.

In der Figur ist durch ein entsprechendes Fließbild das System der Fahrwerksregelung des Reachstackers dargestellt, wobei es sich hier um eine prinzipielle Darstellung handelt, bei der die einzelnen Bauteile des Reachstackers nicht im einzelnen gezeichnet sind.

So werden hier die Sensoren, beispielsweise zur Erfassung der Ist-Geschwindigkeit des Hydraulikdrucks, der Ist-Dieselmotordrehzahl, einer Joystick-Vorgabe und anderer Kenngrößen schematisch durch die Sensorik dargestellt. Die von den Sensoren aufgenommenen Ist-Werte, wie die Ist-Geschwindigkeit, die Joystick-Vorgabe, der Hydraulikdruck, die Ist-Dieseldrehzahl und andere Kenngrößen werden der Fahrwerksregelung zugeführt und dort verarbeitet.

Von Vorteil ist es den momentanen Fahrzustand (z. B. Beschleunigung, Bergfahrt, Bremsen usw.) über eine Fuzzylogikeinheit zu bewerten und entsprechende Regelvorgaben an verschiedenste Regler weiterzuleiten. Entsprechend dem Ausgang der Fahrwerksregler wird für bestimmte Fahrtsituationen die Hydraulikvorgabe ermittelt und an hier nicht näher dargestellte Stellglieder des Reachstackers weitergegeben. Die Bedienung des Reachstackers hinsichtlich Geschwindigkeit und Position ist vorteilhaft nur durch einen einzigen Joystick (hier nicht näher dargestellt) möglich.

## Patentansprüche

1. Telelader, insbesondere Reachstacker, bestehend aus einem Fahrzeugrahmen, an diesem angeordneten Rädern, einem Motor, vorzugsweise einem Dieselmotor, und einem auf diesem verschwenkbar angeordneten Teleskopausleger mit einem Lastaufnahmemittel für den Umschlag von schweren Lasten wie Containern, Trailern, Blech-Coils, Stückgut und ähnlichem, wobei die Räder über einen hydrostatischen Antrieb antreibbar sind, der über eine Fahrwerksregelung steuerbar ist,
**dadurch gekennzeichnet, dass** die Fahrwerksregelung Sensoren zum Erfassen der Ist-Zustände aufweist, die über eine Logikeinheit, in der Logik- und Regleralgorithmen ablaufen, die Befehle an die Stellglieder des hydrostatischen Antriebes leitet und als Logikeinheit eine Fuzzylogikeinheit zur Ermittlung der Regeln der Fahreigenschaften in Kombination mit nachgeschalteten Reglern eingesetzt wird, wobei die Fuzzylogikeinheit die Gewichtung der verschiedenen Regler definiert.

2. Telelader nach Anspruch 1, **dadurch gekennzeichnet, dass** in der Fahrwerksregelung Regeln für die Fahreigenschaften definiert werden, wie beispielsweise Beschleunigen, hydrostatisches Bremsen, Verändern der Motordrehzahl in Abhängigkeit von der Steigung, Fahren unter Last, Ausgleich durchdrehender Räder.

3. Telelader nach einem der vorhergehenden Ansprüche, **dadurch gekennzeichnet, dass** die Fahrwerksregelung über ein Bedienelement oder auch mehrere Bedienelemente zentral erfolgt.

4. Telelader nach Anspruch 3, **dadurch gekennzeichnet, dass** das Bedienelement zur zentralen Bedienung der Fahrwerksregelung ein Joystick ist.

## Claims

1. A telescopic loader, in particular a reach stacker, consisting of a vehicle frame, wheels arranged thereon, an engine, preferably a diesel engine, and a telescopic boom pivotably arranged thereon with a load receiving means for the transferring of heavy loads such as containers, trailers, sheet metal coils, part loads and the like, wherein the wheels can be driven via a hydrostatic drive which can be controlled via an undercarriage control,
**characterized in that** the undercarriage control has sensors for the detection of the actual states which passes the commands to the controlling elements of the hydrostatic drive via a logic unit in which logic algorithms and controller algorithms run; and a fuzzy logic unit is used as a logic unit for the determination of the rules of the driving properties in combination with downstream controllers, with the fuzzy logic unit defining the weighting of the different controllers.

2. A telescopic loader in accordance with claim 1, **characterized in that** rules for the driving properties such as acceleration, hydrostatic braking, changing the engine speed in dependence on the gradient, driving under load, compensation of spinning wheels, are defined in the undercarriage control.

3. A telescopic loader in accordance with one of the preceding claims, **characterized in that** the undercarriage control takes place centrally via an operating element or also a plurality of operating elements.

4. A telescopic loader in accordance with claim 3, **characterized in that** the operating element for the central operation of the undercarriage control is a joystick.

## Revendications

1. Chargeur télescopique, en particulier élévateur rétractable, constitué d'un châssis de véhicule, de roues montées sur celui-ci, d'un moteur, de préférence d'un moteur Diesel et d'une flèche télescopique disposée d'une manière pivotante sur celui-ci, avec un moyen de réception de charge pour le transbordement de charges lourdes, comme de conteneurs, de remorques, de bobines de tôle, de marchandises diverses et analogue, où les roues peuvent être entraînées par un entraînement hydrostatique, qui peut être commandé par une régulation du mécanisme de déplacement,
**caractérisé en ce que** la régulation du mécanisme de déplacement présente des capteurs pour la détection des états réels, qui transmet par une unité logique, dans laquelle se déroulent des algorithmes logiques et de régulation, les instructions aux organes de positionnement de l'entraînement hydrostatique, et comme unité logique, une unité logique floue est utilisée pour la détermination des régulations des caractéristiques de déplacement en combinaison avec des régulateurs disposés en aval, l'unité logique floue définissant la pondération des différents régulateurs.

2. Chargeur télescopique selon la revendication 1, **caractérisé en ce que** dans la régulation du mécanisme de déplacement, des règles pour les propriétés de déplacement sont définies, comme par exemple l'accélération, le freinage hydrostatique, la modification du nombre de tours du moteur en fonction d'une pente, le déplacement sous charge, la compensation de roues qui patinent.

3. Chargeur télescopique selon l'une des revendications précédentes, **caractérisé en ce que** la régulation du mécanisme de déplacement a lieu d'une manière centrale par un élément de manoeuvre ou aussi de plusieurs éléments de manoeuvre.

4. Chargeur télescopique selon la revendication 3, **caractérisé en ce que** l'élément de manoeuvre pour la commande centrale de la régulation du mécanisme de déplacement est un manche de pilotage.
